**Europäisches Patentamt**

**European Patent Office**

**Office européen des brevets**

(19)

(11) Veröffentlichungsnummer: **0 010 688**
A1

(12) # EUROPÄISCHE PATENTANMELDUNG

(21) Anmeldenummer: **79104013.2**

(22) Anmeldetag: **18.10.79**

(51) Int. Cl.³: **B 29 C 29/00,** B 29 F 3/02,
B 29 D 7/00

(30) Priorität: **20.10.78 DE 2845650**

(43) Veröffentlichungstag der Anmeldung: **14.05.80**
**Patentblatt 80/10**

(84) Benannte Vertragsstaaten: **AT BE FR GB NL SE**

(71) Anmelder: **MANNESMANN DEMAG
KUNSTSTOFFTECHNIK ZWEIGNIEDERLASSUNG DER
MANNESMANN DEMAG AKTIENGESELLSCHAFT,
Rennweg 37, D-8500 Nürnberg (DE)**

(72) Erfinder: **Schmidt, Ralf, Schönberger Weg 6, D-8560
Lauf (DE)**

(74) Vertreter: **Louis, Dieter et al, LOUIS, PÖHLAU &
LOHRENTZ Patentanwälte Kesslerplatz 1, D-8500
Nürnberg (DE)**

(54) **Verfahren und Vorrichtung zur Herstellung von Kunststofflach- oder Blasfolien.**

(57) Bei dem erfindungsgemäßen Verfahren und der Vorrichtung zur Herstellung von Kunststofflach- oder Blasfolien mit Hilfe eines Hauptextruders (10), in den nach der Einfüllöffnung für das Neumaterial von der aus dem Hauptextruder gewonnenen Folienbahn abgeschnittene Rand- und/oder Mittelstreifen sowie andere Kunststoffabfälle eingeführt werden, werden nunmehr die abgeschnittenen Rand- und/oder Mittelstreifen sowie die sonstigen Kunststoffabfälle in plastifiziertem Zustand in den Schmelzbereich des Hauptextruders mit Hilfe eines beheizbaren Rückspeiseextruders (28) eingespeist. Dadurch wird die Mischqualität erheblich verbessert, so daß trotz Verwendung von Abfällen eine gute Folienqualität erzielbar ist.

EP 0010688 A1

- 1 -

Verfahren und Vorrichtung zur Herstellung
von Kunststoffflach- oder Blasfolien

Die Erfindung betrifft ein Verfahren zur Herstellung
von Kunststoffflach- oder Blasfolien, bei dem in einen Hauptextruder nach der Einfüllöffnung für das
Neumaterial von der aus dem Hauptextruder gewonnenen
Folienbahn abgeschnittene Rand- und/oder Mittelstreifen sowie gegebenenfalls andere Kunststoffabfälle
eingeführt werden.

Die Erfindung betrifft ausserdem eine Vorrichtung zur
Durchführung des Verfahrens, mit einem vorzugsweise
als Schneckenpresse ausgebildeten Hauptextruder und
einem in den Hauptextruder nach der Einfüllöffnung
für das Neumaterial einmündenden, vorzugsweise als
Schneckenpresse ausgebildeten Rückspeiseextruder zur
Rückführung der von der gewonnenen Folienbahn abgeschnittenen Rand- und/oder Mittelstreifen sowie gegebenenenfalls anderer Kunststoffabfälle.

Ein Verfahren und eine Vorrichtung der oben genannten Art sind beispielsweise aus der DE-AS 16 29 618 bekannt. Danach werden die abgeschnittenen Randstreifen mit Hilfe einer Saugeinrichtung abgesaugt, dann in einer Mühle zerkleinert und über ein Zyklon dem Rückspeiseextruder zugeführt, der die zerkleinerten Folienrandstreifen ca. 1 D (D = Schneckendurchmesser) nach der Einfüllöffnung für das Neumaterial im Feststoffbereich des Hauptextruders einspeist.

Bei einer anderen bekannten Anlage zur Herstellung von Kunststoffflachfolien werden die abgesaugten und zerkleinerten Folienrandstreifen über ein Zyklon einem Haupttrichter zugeführt, in dem eine Zentralschnecke die Folienschnitzel und das granulatförmige Neumaterial mischt. Diese Mischung wird dann dem Hauptextruder zugeführt.

Beide Rückspeisesysteme sind vom Aggregatumfang her recht aufwendig. Ferner lässt die Mischqualität insbesondere bei dem letztgenannten System noch zu wünschen übrig. Dies gilt vor allen Dingen aufgrund der Tatsache, dass die zerkleinerten Folienrandstreifen und das Neumaterial ein unterschiedliches Schüttgewicht aufweisen.

Der Erfindung liegt daher die Aufgabe zugrunde, das Verfahren der eingangs genannten Art so weiterzubilden, dass mit geringem Aufwand die Mischqualität gegenüber den bekannten Systemen verbessert werden kann, so dass trotz Verwendung von Abfällen eine gute Folienqualität erzielt wird.

- 3 -

Diese Aufgabe wird erfindungsgemäss dadurch gelöst, dass die abgeschnittenen Rand- und/oder Mittelstreifen sowie die gegebenenfalls vorhandenen anderen Kunststoffabfälle im plastifizierten Zustand in den Schmelzbereich des Hauptextruders eingespeist werden.

Aufgrund der Tatsache, dass die Kunststoffabfälle als normale Schmelze angeliefert und dem Schmelzbereich des Hauptextruders zugeführt werden, lässt sich eine ausgezeichnete Mischqualität und damit eine besonders gute Folienqualität erzielen.

Vorzugsweise werden die abgeschnittenen Rand- und/oder Mittelstreifen kontinuierlich über Leitrollen und einen Hilfsabzug zu einem beheizbaren Rückspeiseextruder zurückgeführt, mit dessen Hilfe die Streifen aufgeschmolzen und in den Schmelzbereich des Hauptextruders eingespeist werden.

Ferner ist es zweckmässig, die plastifizierten, von der Folienbahn abgeschnittenen und zurückgeführten Streifen und sonstige plastifizierte Kunststoffabfälle im drucklosen Bereich der Mehrzonenschnecke des Hauptextruders einzuspeisen.

In einer bevorzugten Vorrichtung zur Durchführung des erfindungsgemässen Verfahrens wird als Einzugs-, Misch- und Aufschmelz-Aggregat für die Einspeisung der plastifizierten Folienstreifen und Kunststoffabfälle ein beheizbarer Rückspeiseextruder gewählt, der in dem drucklosen Bereich der Mehrzonenschnecke

- 4 -

des Hauptextruders mündet, wobei der Hauptextruder im drucklosen Bereich der Mehrzonenschnecke eine Entgasungsöffnung aufweisen kann.

Die Mischqualität und damit die Folienqualität kann noch weiter verbessert werden, wenn ein oder mehrere Mischteile im Schmelzbereich zwischen dem Einlass des Rückspeiseextruders und dem Schmelzeaustritt angeordnet sind.

Die Rückführung der abgeschnittenen Folienstreifen kann durch eine Vakuumansaugvorrichtung erfolgen, was speziell bei klebrigen Folien vorteilhaft ist. Jedoch werden in einer bevorzugten Ausführungsform bei nicht-klebrigen Folien die abgeschnittenen, kontinuierlichen Folienstreifen über regelbar angetriebene Transportwalzen dem Rückspeiseextruder zugeführt. Der Einspeisespalt des Rückspeiseextruders für die Folienstreifen kann im ersten Fall mittels Gummilippen abgedichtet sein, so dass im Einzugsbereich des Rückspeiseextruders zur Unterstützung des Einzugsvorgangs Vakuum angelegt werden kann. Ferner ist der Einzugsbereich des Rückspeiseextruders vorzugsweise konisch ausgebildet, wobei im Einzugsbereich Abscherkanten für die eingezogenen Folienstreifen vorgesehen sein können, die die Folienstreifen sofort nach dem Einzug zerkleinern, so dass die Zuführgeschwindigkeit der Streifen unabhängig von der Drehgeschwindigkeit der Schnecke ist.

Weitere Vorteile, Einzelheiten und Merkmale der Erfindung ergeben sich aus der nachstehenden, anhand der beiliegenden Zeichnung erfolgenden Beschreibung eines bevorzugten Ausführungsbeispiels.

In der Zeichnung stellen dar:

Figur 1    schematisch eine Seitenansicht einer bevorzugten Ausführungsform der erfindungsgemässen Vorrichtung zur Herstellung von Kunststoffflachfolien,

Figur 2    schematisch eine Draufsicht auf einen Ausschnitt der Vorrichtung der Figur 1,

Figur 3    schematisch einen Schnitt durch den Hauptextruder und den Rückspeiseextruder einschliesslich der Transportwalzen  und

Figur 4    eine abgeänderte Ausführungsform des Rückspeiseextruders in dessen Einzugsbereich.

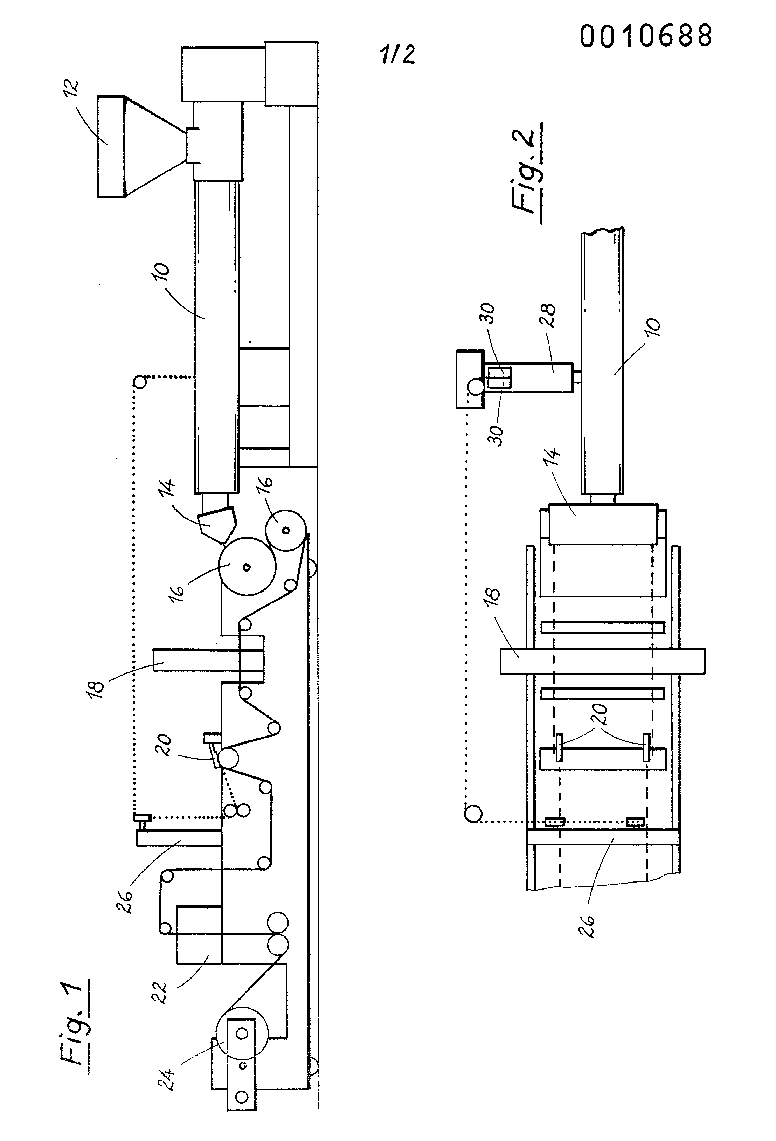

Es wird zunächst Bezug auf die Figuren 1 und 2 genommen. Ein als Schneckenpresse ausgebildeter, horizontal liegender Hauptextruder 10 ist an seiner Einfüllöffnung für das Neumaterial mit einem Einfülltrichter 12 verbunden. Am Schmelzeaustritt des Hauptextruders 10 ist eine Breitschlitzdüse 14 angeschlossen, von der die Folienbahn über angetriebene Abkühlwalzen 16 zu einer Dickenmesseinrichtung 18 und dann weiter zu einer Schneideinrichtung 20 läuft, die die Randstreifen der Folienbahn abschneidet. Die Folienbahn ist in Figur 1 mit einer ausgezogenen Linie und in Figur 2 gestrichelt dargestellt, während die abgeschnittenen Randstreifen in der Zeichnung punktiert sind. Die Folienbahn, von der die Randstreifen abgeschnitten sind, durchläuft dann eine Abzugseinrichtung 22, wobei sie zwischen zwei Transportwalzen hindurchläuft, und wird schliesslich in einer Wickeleinrichtung 24 aufgewickelt. Die von der Folienbahn abgeschnittenen Randstreifen werden über eine Umlenkeinrichtung 26, deren Umlenkrollen zur Festlegung der Lage der Randstreifen einstellbar sind, zurück zum Hauptextruder 10 geführt, wo sie in einen Rückspeiseextruder 28 eingegeben werden.

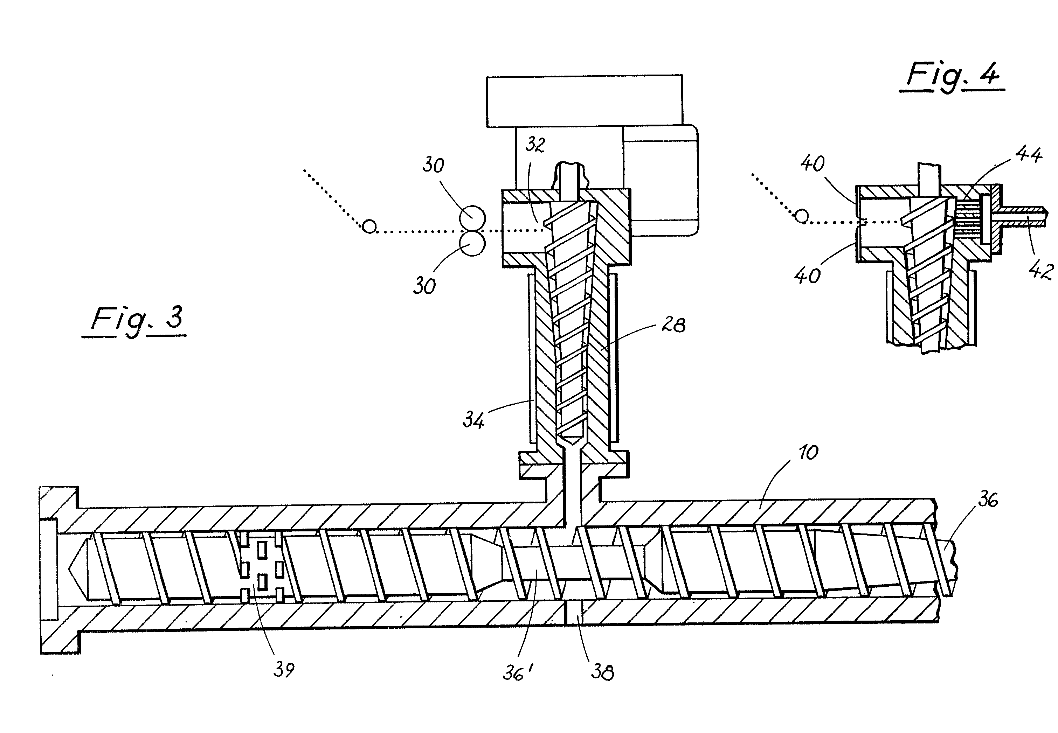

Wie in Figur 3 veranschaulicht ist, sind zur Zuführung der abgeschnittenen, kontinuierlich geförderten Folienstreifen zu dem Rückspeiseextruder an dessen Einspeiseöffnung regelbar angetriebene Transportwalzen 30 vorgesehen, die die Folienstreifen mit der gleichen Geschwindigkeit, wie sie die Folienbahn aufweist, dem konisch ausgebildeten Einzugsbereich 32 des Rückspeiseextruders 28 zuführen. Der Rückspeiseextruder 28 weist in seinem zylindrischen Abschnitt eine Heizvorrichtung 34 auf, mit deren Hilfe die von der Schnecke des Rückspeiseextruders 28 herangeführte Folienmasse aufgeschmolzen wird. Der Rückspeiseectruder 28 ist an den Hauptextruder 10 in dem Bereich angeschlossen, in dem das in den Hauptextruder eingeführte Neumaterial bereits in plastifiziertem Zustand vorliegt. Insbesondere mündet in der dargestellten Ausführungsform der Rückspeiseextruder 28 in den drucklosen Bereich des Hauptextruders, der durch den Abschnitt 36' der Mehrzonenschnecke 36 gebildet wird, in welchem die Mehrzonenschnecke einen wesentlich geringeren Kerndurchmesser aufweist. In diesem Bereich ist auch eine Entgasungsöffnung 38 vorgesehen.

Da im Gegensatz zu den bekannten Systemen gemäss der Erfindung Schmelze mit Schmelze gemischt wird, lässt sich eine ausgezeichnete Mischqualität und damit eine gleichbleibende Folienqualität erzielen. Die Qualität lässt sich aber noch verbessern, wenn, wie in Figur 3 angedeutet, die Schnecke 36 mit einem oder mehreren Mischteilen 39 versehen wird.

In Figur 4 ist eine abgeänderte Ausführungsform im Einzugsbereich des Rückspeiseextruders dargestellt. Gemäss dieser Ausführungsform werden die Folienstreifen nicht wie in Figur 3 über Transportwalzen dem Rückspeiseextruder zugeführt. Vielmehr ist hier der Einspeisespalt des Rückspeiseextruders mittels Gummilippen 40 abgedichtet und eine nicht näher dargestellte Vakuumpumpe über ein Anschlussstück 42 mit dem Rückspeiseextruder verbunden, wobei Feinbohrungen 44 im Extrudergehäuse die Verbindung zwischen dem Anschlussstück 42 und dem konisch ausgebildeten Innenraum des Extruders herstellen. Auf diese Weise können die Folienstreifen durch Saugeinwirkung in den Rückspeiseextruder eingegeben werden.

Ferner können, wie nicht näher dargestellt ist, im Einzugsbereich des Rückspeiseextruders 28 Abscherkanten für die eingezogenen Folienstreifen vorgesehen sein, die die Folienstreifen beim Einziehen zerkleinern. Dadurch wird die Zuführgeschwindigkeit der Folienstreifen unabhängig von der Drehgeschwindigkeit der Schnecke.

- 1 -

Patentansprüche:
----------------

1. Verfahren zur Herstellung von Kunststoffflach-
   oder Blasfolien, bei dem in einen Hauptextruder
   nach der Einfüllöffnung für das Neumaterial von
   der aus dem Hauptextruder gewonnenen Folienbahn
   abgeschnittene Rand- und/oder Mittelstreifen sowie gegebenenfalls andere Kunststoffabfälle eingeführt werden, dadurch gekennzeichnet, dass die
   abschnittenden Rand- und/oder Mittelstreifen sowie die sonstigen Kunststoffabfälle in plastifiziertem Zustand in den Schmelzbereich des Hauptextruders eingespeist werden.

2. Verfahren nach Anspruch 1, dadurch gekennzeichnet, dass die abgeschnittenden Rand- und/oder
   Mittelstreifen kontinuierlich über Leitrollen
   und einen Hilfsabzug zu einem beheizbaren Rückspeiseextruder zurückgeführt werden, mit dessen
   Hilfe die Streifen aufgeschmolzen und in den
   Schmelzbereich des Hauptextruders eingespeist
   werden.

- 2 -

3. Verfahren nach Anspruch 1 oder 2, dadurch gekennzeichnet, dass die plastifizierten, von der Folienbahn abgeschnittenen Streifen und sonstige plastifizierte Kunststoffabfälle im drucklosen Bereich des Hauptextruders eingeführt werden.

4. Vorrichtung zur Durchführung des Verfahrens nach Anspruch 1, mit einem vorzugsweise als Schneckenpresse ausgebildeten Hauptextruder und einem in den Hauptextruder nach der Einfüllöffnung für das Neumaterial einmündenden, vorzugsweise als Schneckenpresse ausgebildeten Rückspeiseextruder zur Rückführung der von der gewonnenen Folienbahn abgeschnittenen Rand- und/oder Mittelstreifen sowie gegebenenfalls anderer Kunststoffabfälle, dadurch gekennzeichnet, dass der Rückspeiseextruder (28) in den Schmelzbereich des Hauptextruders (10) mündet und zur Plastifizierung der Kunststoffabfälle beheizbar ist.

5. Vorrichtung nach Anspruch 4, dadurch gekennzeichnet, dass der Rückspeiseextruder (28) in den drucklosen Bereich (36') der Mehrzonenschnecke (36) des Hauptextruders mündet.

6. Vorrichtung nach Anspruch 4 oder 5, dadurch gekennzeichnet, dass im drucklosen Bereich des Hauptextruders (10) eine Entgasungsöffnung (38) vorgesehen ist.

- 3 -

7. Vorrichtung nach einem der Ansprüche 4 bis 6, dadurch gekennzeichnet, dass ein oder mehrere Mischteile (39) im Schmelzbereich zwischen dem Einlass des Rückspeiseextruders (28) und dem Schmelzaustritt angeordnet sind.

8. Vorrichtung nach einem der Ansprüche 4 bis 7, dadurch gekennzeichnet, dass regelbar angetriebene Transportwalzen (30) zur Zuführung der abgeschnittenen, kontinuierlich geförderten Folienstreifen zu dem Rückspeiseextruder (28) an dessen Einspeiseöffnung vorgesehen sind.

9. Vorrichtung nach einem der Ansprüche 4 bis 7, dadurch gekennzeichnet, dass der Einspeisespalt des Rückspeiseextruders (28) mittels Gummilippen (40) abgedichtet ist und dass der Einzugsbereich des Rückspeiseextruders an eine Vakuumeinrichtung angeschlossen ist.

10. Vorrichtung nach einem der Ansprüche 4 bis 9, dadurch gekennzeichnet, dass der Einzugsbereich (32) des Rückspeiseextruders (28) konisch ausgebildet ist.

11. Vorrichtung nach einem der Ansprüche 4 bis 10, dadurch gekennzeichnet, dass im Einzugsbereich des Rückspeiseextruders Abscherkanten für die eingezogenen Folienstreifen vorgesehen sind.

_Fig. 1_

_Fig. 2_

0010688

Fig. 4

Fig. 3

2/2

0010688

Europäisches
Patentamt

**EUROPÄISCHER RECHERCHENBERICHT**

0010688
Nummer der Anmeldung

EP 79 104 013.2

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | DE - B2 - 2 426 714 (DYNAMIT NOBEL AG) * Anspruch 1 * -- | 1 | B 29 C 29/00 B 29 F 3/02 B 29 D 7/00 |
| A | DE - B2 - 2 308 698 (FELDMÜHLE GMBH) * Anspruch 1 * -- | 1 | |
| A | DE - A1 - 2 351 328 (VEREINIGUNG ZUR FÖRDERUNG DES INSTITUTS FÜR KUNSTSTOFFVERARBEITUNG) * Anspruch 1 * -- | 1 | **RECHERCHIERTE SACHGEBIETE (Int.Cl.³)** B 29 C 29/00 B 29 D 7/00 B 29 F 3/02 |
| A | DE - A1 - 2 639 650 (R. WOLLNIK) * Anspruch 3 * --- | 4 | |
| A | AT - B - 256 439 (F. SCHWÄRZLER) * Anspruch 1 * -- | 1 | |
| A | INDUSTRIE ANZEIGER, Band 99, Heft 57, 15. Juli 1977 G. MENGES et al. "Verwertung von Kunststoffabfällen über die Schmelze" Seiten 1118 bis 1120 * Seite 1120, Spalte 1, Zeilen 27 bis 50 * ---- | 1 | **KATEGORIE DER GENANNTEN DOKUMENTE** X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |

| X | Der vorliegende Recherchenbericht wurde für alle Patentansprüche erstellt. |
|---|---|

| Recherchenort | Abschlußdatum der Recherche | Prüfer |
|---|---|---|
| Berlin | 29-01-1980 | GOLDSCHMIDT |

EPA form 1503.1 08.78